# Europäisches Patentamt

## European Patent Office

## Office européen des brevets

(19)

(11) Publication number: **0 029 067**

**B1**

(12) **EUROPEAN PATENT SPECIFICATION**

(45) Date of publication of patent specification: **19.04.89**

(51) Int. Cl.⁴: **H 02 M 3/28,** H 02 M 7/12, H 02 M 5/45

(21) Application number: **80901166.1**

(22) Date of filing: **27.05.80**

(86) International application number: **PCT/US80/00620**

(87) International publication number: **WO 80/02779 11.12.80 Gazette 80/28**

(54) A converter circuit for storing a predetermined quantity of energy.

(30) Priority: **30.05.79 US 43882**

(43) Date of publication of application: **27.05.81 Bulletin 81/21**

(45) Publication of the grant of the patent: **19.04.89 Bulletin 89/16**

(84) Designated Contracting States: **AT CH DE FR GB LI LU NL SE**

(56) References cited:
**US-A-3 046 466**
**US-A-3 659 184**
**US-A-3 953 779**
**US-A-4 096 557**

(73) Proprietor: **Schwarz, Ruth Round Hill Road Lincoln, Massachusetts 01773 (US)**

(73) Proprietor: **Frijouf, Robert F. 2009 Cape Bend Avenue Tampa County of Hillsborough, Florida 33613 (US)**

(72) Inventor: **Schwarz, Francisc C. deceased (US)**

(74) Representative: **Hallam, Arnold Vincent et al E.N. LEWIS & TAYLOR 144 New Walk Leicester LE1 7JA (GB)**

Courier Press, Leamington Spa, England.

# EP 0 029 067 B1

**Description**

Technical field

This invention relates to power converters which transform electric energy from a polyphase a.c. or a d.c. source to a recurrent train of discrete quantities of energy. These quantities of energy can be utilized in pulseforming networks which feed a pulse energy demanding load for a recurrent succession of operation. Typical loads of this kind are pulsed laser or radar systems.

Background art

Static power converters of the kind as just described are well known in the art. One representative kind consists of a cascaded succession of: (1) a three-phase full wave rectifier; (2) a low frequency d.c. filter to smooth the remnants of the a.c. content in the rectified a.c. voltage; (3) a regulating type of d.c. to d.c. converter with a built in voltage scaling device such as a transformer; and (4) an output filter to smooth the effects of the internal operation of the aforesaid d.c. to d.c. converter. The output power of the aforesaid output filter is then used to charge a discharge capacitor which, at times, is isolated from the above described source of supply and then connected to a pulse energy requiring load, such as a laser system. The above named power converter system performs therefore, a valuable and needed function in present day technology.

This present day state-of-the-art system also embodies the functions of passive low frequency filters to smooth the above explained a.c. ripple content of the rectified a.c. power and of a dissipative waveshaping of the charging voltage for the aforesaid charging capacitor. Furthermore, the described system requires accurate feedback control electronics to stabilize the voltage for the aforesaid discharge capacitor. Passive low frequency filters are inherently bulky, have a heavy physical weight, and are costly. The efficiency of charging capacitors via a dissipative-resistive element, is limited to 50 percent at best, the balance of energy is dissipated, or transformed to heat in the aforesaid resistive elements. Thus more energy is transformed into heat in this process than transferred for a useful purpose to the aforesaid discharge capacitor. The extent of this necessary heat dissipation in the series resistive element of a capacitor charging process is also documented in my doctorate dissertation "A Class of Nonlinear Active Filter for Electric Energy Conversion", Cornell University, 1965. The above said resistive element(s) is(are) often partially or wholly embodied in power controlling solid state elements such as power transistors. The need to let the converter's output voltage follow the replica of a reference signal, which often takes, partially, the form of a ramp function, requires close guidance of the power flow by way of a feedback control system with all of the therewith associated stability problems. These problems cause a certain degree of complexity of the electronic control system.

The state-of-the-art power converters for pulsed loads, as described above, thus involve a substantial bulk of apparatus caused by low frequency filters, substantial heat development requiring adequate provisions for cooling and thus entailing physical bulk of apparatus, and substantial complexity of the electronic control system for purpose of its dynamic stabilization, and thus embodying functional hazards.

Converters employing series resonant circuits for controlled and continuous transfer of energy are well known in the art and are described primarily in U.S. Patent 4,096,557 issued June, 1978; U.S. Patent 3,953,779 issued April 1976; the applicants articles in the IEEE Transactions on Industrial Electronics and Control Instrumentation, IECI-17 and 23 of May 1970 and 1976, respectively; U.S. Patent 3,659,184 issued April 1972; Bedford, B. D. and Hoft, R. G., "Principles of Inverter Circuits", Wiley, New York 1964. A transformerless uncontrollable voltage scaler is described by Cockcroft, J. D., in the Proceedings of the Royal Society, Vol. 136, p. 619, London, 1932.

U.S.—A—4096557 discloses a bilateral device to transform a.c. polyphase power to controllable a.c. or d.c. power, or to perform this transformation in reverse by use of a single high frequency link comprising series resonant circuits. A cyclo-up converter transforms the incoming low frequency power to substantially higher frequencies of the order of kilohertz directly and without the interposition of a d.c. link, and thus without the therewith associated low pass filters. The high frequency link includes series resonant circuits which facilitate the natural current commutation of electronic switching elements, such as controlled rectifiers. The energy is transformed from the high frequency link to a lower frequency output circuit via a cyclo-down converter, as well known in the art. Again, no d.c. link is used for the process. The low frequency output circuit referred to above can operate at zero frequency and thus feed a d.c. load.

The present invention seeks to provide an improved power converter circuit.

Accordingly, the present invention provides a converter circuit for storing a predetermined quantity of energy derived from an a.c. or d.c. power supply comprising:

a controlled input switching arrangement having input terminals connectable to said source;

storage reactance for storing electrical energy;

a circuit coupling said storage reactance to the output of said switching arrangement to deliver energy to said storage reactance, said coupling circuit including reactive impedance and said switching arrangement being controlled to develop an alternating current in said reactive impedance and said coupling circuit further including output rectifier means for delivering direct current to said storage reactance in response to the developed alternating current;

means connected to said coupling circuit and activatable to terminate the coupling afforded between

2

the switching arrangement and the storage reactance such that electrical energy stored in said storage reactance is transferable to a load after such termination; and

a control circuit comprising:

first sensor means coupled to the storage reactance to provide a first signal indicative of the energy stored in the storing reactance;

second sensor means responsive to the current delivered to the coupling circuit by said switching arrangement to provide a second signal dependent on the electrical state of the coupling circuit; and

means having an input connected to said first and second sensor means and an output connected to said termination means and operable to combine said first and second signals to deliver a control output signal to activate said termination means such that said storage reactance attains a predetermined energy storage not greater than a preset maximum energy storage.

In a preferred embodiment of the present invention polyphase a.c. or d.c. energy is transformed directly to controllable trains of recurrent discrete quantities of energy by way of interposition of a nonlinear and nondissipative resonant high frequency link between the source of supply and a pulse forming discharge capacitor. A significant part of this high frequency link comprises switch controlled series resonant circuits to provide natural commutation of switched currents, especially when thyristors are being used. This technique results in high efficiencies of power conversion at a relatively high internal switching pulse frequencies, presently in the order of up to 100 kHz. The flow of electric energy is controlled and smoothed by an active filtering process and all passive low frequency filters and the therewith associated bulk and cost are avoided.

The high internal frequency allows an output pulse repetition rate of approximately one-tenth of the internal pulse frequency, thus presently an output pulse repetition rate (PRR) in the order of 10 kHz. Thus energy is directly extracted from an a.c. or d.c. source and is transferred to the discharge capacitor of a pulse forming network of a pulse power load such as a laser or radar system.

Preferably active filtering techniques are used for replacing all low frequency filters which are otherwise used to suppress the ripple voltages which emanate from a.c. supply sources. Advantageously nondissipative processes of energy transfer and voltage waveshaping are used in order to achieve a high efficiency of operation. The transfer of energy is effected without the use of a d.c. link anywhere in the system, especially in its output circuits.

Operating with a relatively high internal frequency allows load pulse frequencies in excess of 10 kHz at power levels of kilowatts and beyond.

Preferably, the turn-on and turn-off of switching elements is facilitated by way of their operation within internal resonant circuits.

Advantageously, the converter deposes a controllable, accurately measured charge on the aforesaid discharge capacitor, independent of supply line variations and variations of its power circuit component characteristics due to aging or changes of environmental conditions.

Preferably the d.c. input voltage or the apparent d.c. input voltage of an a.c. powered converter is scaled to a desired level by way of a resonant circuit which includes a LC ladder-network and without the use of an internal high voltage transformer.

The present invention is further described hereinafter, by way of example, with reference to the accompanying drawings, in which:

Fig. 1 is a block diagram of the a.c. or d.c. to discrete pulse power converter in its preferred embodiment, using direct conversion from a low power frequency to a high internal frequency by way of a cyclo-up converter, followed by a voltage scaler in the form of a high frequency power transformer-rectifier, for transfer of energy to the pulse discharge capacitor.

Fig. 2 shows the critical current and voltage waveforms of the converter for the purpose of elucidation of the novel aspects of its functional mechanism;

Fig. 3 is a block diagram of the here disclosed converter in which a capacitor multiplier is substituted for the high voltage scaling function of the power transformer.

## Best mode for carrying out the invention

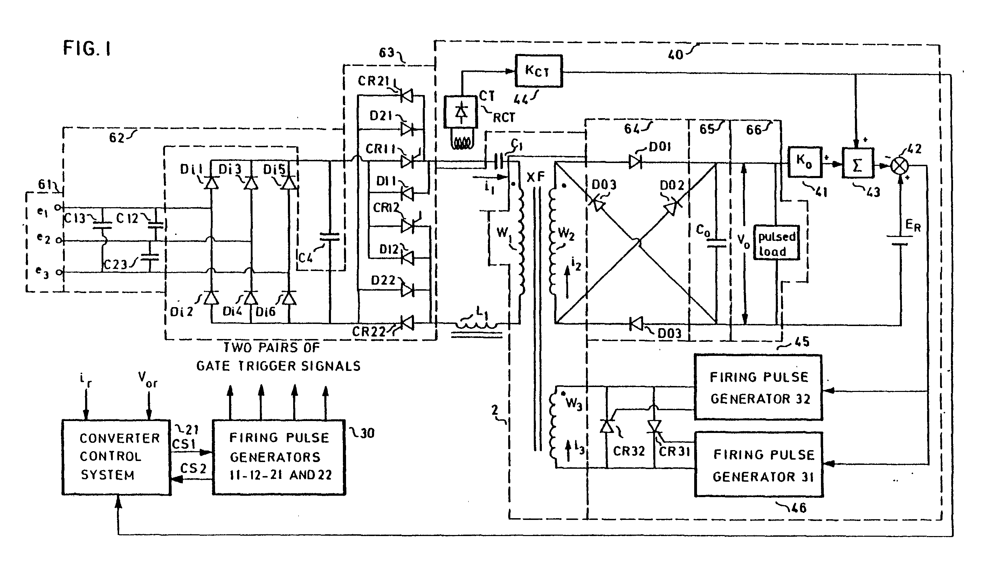

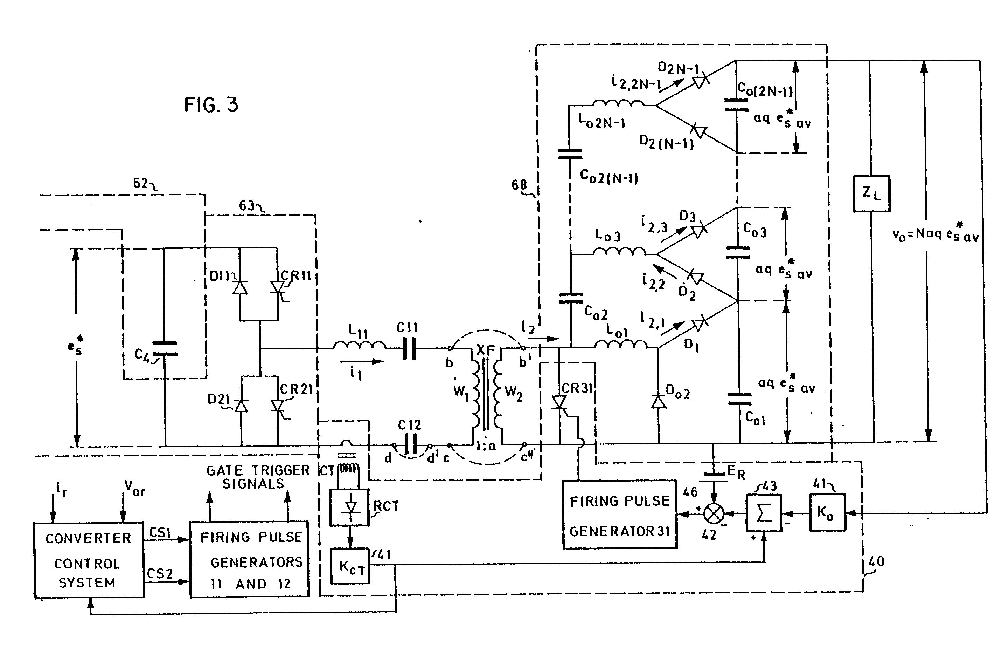

In the drawings, inductors, capacitors, transformers, rectifiers and controlled rectifiers are designated by conventional symbols and by reference characters L, C, XF, D and CR, with various subscripts, respectively. In the specification and claims, the reference characters for inductors, capacitors, diodes and controlled rectifiers may also be used as algebraic symbols to represent the inductance in Henrys and the capacitance in Farads of the several parts. In each case the sense of the usage will be clear from the context. The invention will be described as it is applied with the use of series resonant circuits, as shown in Fig. 1. However, this invention is not restricted to its use, as shown in Figs. 1 and 3. It is readily applied to types of systems which transfer energy from an a.c. or d.c. source of any kind to any load which requires a periodic and uniform train of pulses of electric power or a programmable aperiodic and non-uniform train of such pulses or any combination thereof.

The invention is now further described with reference to the attached figures and should be read in close context with the first two above named references. Referring now specifically to Fig. 1, the converter derives its energy from a polyphase generator 61, indicated here as a three phase sine wave supply line. The polyphase a.c. power enters the power converter via a polyphase a.c. high frequency (a.c.—h.f.) filter

3

62. This filter has a cut-off frequency that is lower than twice the lowest internal converter frequency, but which is approximately two orders of magnitude or more above the low frequency of the polyphase supply line. The purpose of this filter is to isolate the effects of internal converter operation from the supply lines of a.c. power. A filter of rather moderate electrical and physical size is required to suppress high frequency components of the harmonic content which is generated in the currents of the individual phases of the a.c. supply lines, and are caused by the converter operation.

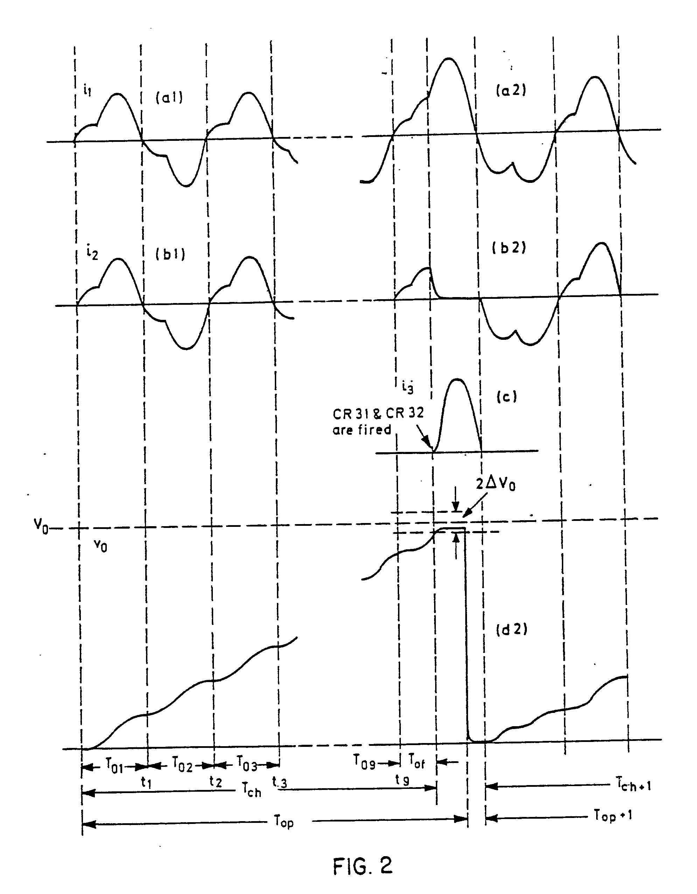

The significant part of the process of extraction of energy from the polyphase supply line and its transformation to power pulses is carried out as follows. The switching matrix 63 transfers electrical power from the three phase source 61 to the series resonant circuit consisting of the capacitor $C_1$ and the inductor $L_1$. This resonant circuit is terminated in the reflection of $C_{o1}$ of the discharge capacitor $C_o$, which is reflected back into the resonant circuit via the output rectifier diode bridge 64 and the transformer XF, which is identified as system element 2. The rectifier bridge 64 causes the development of a voltage $V_2$ on the primary winding $W_1$ of the transformer XF, which always opposes the direction of flow of the resonant current $i_1$ in the aforesaid resonant circuit. The aforesaid resonant circuit is, therefore, terminated in the reflection $C_{o1}=a^2C_o$ of the output capacitor $C_o$, which is modified in magnitude by the square of the turns ratio $N_2/N_1=a$, of the windings $W_2$ and $W_1$ of the aforesaid transformer XF, with the understanding that winding $W_1$ has $N_1$ turns and winding $W_2$ has $N_2$ turns, wound around the commonly enclosed magnetic flux path of the transformer core. The aforesaid switch matrix 63 selects at any time the phase pair with the largest voltage difference $e_i-e_j$ ($i, j=1, 2, 3$; $i\neq j$), when compared to the other then prevailing phase voltage differences in the same a.c. supply system. Power is then extracted in the logically following succession from the above-identified phase pairs and used to generate the resonant current carrier $i_1$ as described in the first two above cited references and elucidated in the thereafter following fourth reference. A quasi-sinusoidal resonant current $i_1$ with a frequency in the order of 10 kHz or 100 kHz is thus generated and possibly modulated, as described in the aforesaid references and as illustrated in Fig. 2(a1).

The aforesaid resonant current $i_1$ in winding $W_1$ of the transformer XF causes the flow of a current $i_2=i_1/a$ in the winding $W_2$ of the same transformer. The rectified current $|i_2|$ charges the capacitor $C_o$ to a voltage:

$$V_o=(1/C_o) \sum_{k=1}^{n} \int_{t_{k-1}}^{t_k} |i_2| \, dt; \quad t_{k-1} \leq t < t_k; \quad t_{k+1}-t_k=T_{ok} \tag{1}$$

where:

n = the number of the successive half cycles of $i_2$ when counting from the time when $v_o-0$;

k = index 1, 2,... n for each of the n half cycles as defined above

$$t_k= \sum_{m=1}^{n} T_{om}; \quad m-1, 2,... n; \quad T_{om} \neq T_{om+1}$$

No charge is removed from the capacitor $C_o$ during the above described process, so that equation (1) remains valid until the just described process of charging of the capacitor $C_o$ is altered.

The objective of the here described process is to charge capacitor $C_o$ with a number of not more than N half cycles or pulses of the current $i_2$ to a nominal voltage $V_o$ as prescribed by the requirements for the here presented converter. The voltage $V_o$ eventually reaches, after a number of $N-1$ half cycles of the secondary resonant current $i_2$, a magnitude:

$$V_o>V_o(t_{N-1})>Vo-(1/C_o) \int_{t_{N-1}}^{t_N} |i_2| \, dt \tag{2}$$

This means in words that the voltage $v_o$ of the capacitor has reached after the $(N-1)$th cycle a magnitude $v_o(N-1)$ which is smaller than its nominal target $V_o$, but that the addition of further charge contained in another half cycle of $|i_2|$ may cause the said voltage $v_o$ to exceed its intended target $V_o$.

A mechanism is now described which secures that the said voltage $v_o$ will remain within a tolerance of $\pm\Delta V_o$ of the nominal value $V_o$, so that at the termination of the charging time $T_{ch}$ of the capacitor $C_o$ its voltage will be within the limits:

$$V_o-\Delta V_o<v_o(T_{ch})<V_o+\Delta V_o \tag{3}$$

where:

$$T_{ch}=t_{N-1}+T_{of}$$

This is illustrated in Figs. 2(d1) and 2(d2) where $N-1$ is arbitrarily chosen so that $N-1=9$ and thus

EP 0 029 067 B1

$t_n-1=t_9$. The capacitor voltage $v_o$ satisfies then the conditions described with the inequality (2), addition of the charge of one more half cycle of $|i_2|$ would cause an increase of the voltage of capacitor $v_o$ beyond its limits as defined by the inequality (3) above. The charging process is at the point in time $t=t_{N-1}$; its (N−1)th cycle is illustrated as the 9th cycle in Figs. 2(d1) and 2(d2) at the time $t_9$. Each of the said charging cycles corresponds to one of the one half cycles of the secondary resonant current $i_2$. The Nth charging cycle of the capacitor $C_o$ is initiated notwithstanding the fact that a completion of this cycle would lead to a violation of the inequality (3) and thus fail to secure a compliance of $v_o$ with the intended purpose, as required by this inequality (3). The voltage of the capacitor $C_o$ thus starts to rise according to:

$$v_o=v_o(t_{N-1})+(1/C_o) \int_{t_{N-1}}^{t-t_{N-1}} |i_2| \, dt \qquad (4)$$

An instant of time $T_{ch}=t_{N-1}+T_{of}$ is eventually reached when:

$$v_o(T_{ch})=V_o-L_o | i_1 | \qquad (5)$$

when
$L_o=2\varepsilon_o/i_1^2$ and
$\varepsilon_o$=the energy which will be yet conveyed to the capacitor $C_o$ after a command to fire the thyristors CR31 and CR32 and thus to short circuit the transformer XF by way of its tertiary winding $W_3$ is given.

The primary resonant current $i_1$ is monitored by a current sensor in the form of a current transformer CT as shown in Fig. 1. The resulting signal is rectified by the rectifier RCT and then conveyed to an attenuator 44, which reduces this rectified signal by an appropriate factor $K_{CT}$. The therefrom resulting signal is added in the summer 43 to the voltage $v_o$ of capacitor $C_o$ after its attenuation by the attenuator 41 by a factor $K_o$. The output of the summer 43 is then compared to a reference signal $E_R$ by a discriminator 42. All of these system components are part of the output voltage detector and stabilizing subsystem illustrated within the block 40 of Fig. 1. The above cited constants $K_{CT}$ and $K_o$ are so dimensioned that the discriminator 42 emits a signal when the condition stated in equation (5) occurs. The aforesaid signal of the comparator 42 energizes the firing pulse generators 45 and 46 which in turn "fire" thyristors CR31 and CR32. Winding $W_3$ of the transformer XF is thus short-circuited and the conditions of equation (5) are satisfied provided that an appropriate quantitative relationship is established between the magnitudes of $L_o$, the constants $K_{CT}$ and $K_o$, and possibly the effect of delays in the signal transmission, including the "firing" of the above identified thyristors CR31 and CR32.

The equation (5) is derived from the energy balance:

$$\tfrac{1}{2}\{v_o(T_{ch})\}^2 C_o+\tfrac{1}{2}L_o i_1^2=\tfrac{1}{2}V_o^2 C_o \qquad (6)$$

Equation (5) follows from (6) after differentiation of (6) and introduction of the necessary integration constant $C_i=0$ since the concerned voltages $v_o$ and $V_o$ are identical in (5) and (6) as is the term $\tfrac{1}{2}L_o i_2^2=0$ for $i_1=0$. The constant $L_o$ is established by an analytical/experimental process, as is well known in the art. The range of tolerance, defined by the inequality (3) allows to accommodate minor variations that may be rooted in the tolerances caused by the physical structures of the concerned components. Refinements of the described process can be applied if necessary, as known to those experienced in the art.

Some significant aspects of the here described process are illustrated in Figs. 2(a2), 2(b2), 2(c) and 2(d2). The current $i_3$ originates after thyristors CR31 and CR32 are fired as shown in Fig. 2(c). This current $i_3$ satisfies Ampere's law of equal ampere-turns with respect to the current $i_1$. The voltage which was previously induced in winding $W_2$ of the transformer XF collapses therefore and the diodes DOi (1=1, 2, 3, 4) in the output rectifier bridge 64 are "cut off" after the energy $\varepsilon_o$, as defined above, has been discharged into the output capacitor $C_o$. It is seen in Figs. 2(b2) and 2(a2) that the current $i_2$ is reduced to zero after the time interval $T_{ch}$, notwithstanding the fact that the primary resonant current $i_1$ continues to flow and even increases temporarily in amplitude, as qualitatively indicated in Fig. 2(a2). The option to short circuit the power transformer XF in the above described manner without causing undue stresses in the system is a unique property of the power converters employing series resonant circuits, as here described for the here intended purpose. An explanation of the therewith associated phenomena is contained in the first, second and fourth references cited above. Discharge of the capacitor $C_o$ via its pulse demanding load at the time $T_{op}$ is implied by the steep fall of the voltage $v_o$ at that time, as illustrated in Fig. 2(d2). The converter resumes its charging process shortly thereafter as implied by the repetition of the "staircase" voltage $v_o$ in the thereupon following time interval $T_{ch+1}$.

The individual charge intervals $T_{ch}\neq T_{ch+1}$ need not to be equal, depending upon the degree of discharge of the capacitor $C_o$, changes in the input voltages $e_i$ (i=1, 2, 3), the respective time value of $e_i-e_j$ as defined above, and changes of component characteristics due to aging, variations of their temperature and other related causes. Yet, the here presented mechanism will satisfy the inequality (3) independent of the above enumerated phenomena, which could otherwise cause a deviation of $v_o(T_{ch})$ from its nominal value $V_o$ in excess of a required and predetermined limit $\Delta V_o$. This is achieved without the use of low

5

frequency power filters and without the use of a d.c. "link" between the converter and its load, the discharge capacitor $C_o$. Also, nowhere is a dissipative process of voltage wave-shaping applied.

It is obvious to those skilled in the art that one could connect a source of d.c. power to any pair of input terminals in the block 61 of Fig. 1. It is also obvious to those skilled in the art that one could then remove the capacitors C12, C13 and C23 of the input filter 62 and all but two diodes Dij (j=1 through 6) in the block 63 of Fig. 1 if the polarity of the thus connected d.c. source is positive at the terminal marked $e_i$ (i=1, 2) with respect to the terminal $e_j$ (j=2, 3) with a lower index. The remaining two diodes can be shorted since they may serve no other purpose in this case. The then ensuing operation of the converter will be exactly the same as in the above described case in which the electric energy is derived from a polyphase a.c. supply source.

It will be appreciated that the converter can be operated as a transformerless converter with capacitors connected to provide galvanic isolation, as is described below with reference to Figure 3.

In another embodiment of the same invention, a power converter which can generate a recurrent sequence of high voltage pulses as explained above, is now described with reference to Fig. 3. It is assumed that the a.c. power is derived from the three phases with voltages $e_1$, $e_2$ and $e_3$ in block 61, as illustrated in and discussed with reference to Fig. 1. This power is then processed by the high frequency filter in block 62 as described above. The switch matrix 63 comprises diodes Dij (j=1 through 6) which operate in conjunction with a half bridge rather than a full bridge version of the here presented converter and as described in the above cited references. The material in the above cited references teaches that the functional philosophy and the external characteristics of half and full bridge converters of the here described class are identical except for a factor of two concerning maximum current and voltage stresses in the respective switching components, even though the product of these aforesaid stresses remains constant for both versions of the here presented converter when compared at the same impedance and the same power level. Presentation of the converter in its full bridge configuration in Fig. 1 and in its half bridge configuration in Fig. 3 is, therefore, a matter of convenience and an indication of the multiplicity of possible forms of implementation.

The primary resonant circuit of Fig. 3 consists of one inductor $L_{11}$ and the capacitors $C_{11}$ and $C_{12}$. All of these elements are arranged in series. This aforesaid series combination also includes the one half switching bridge consisting of thyristors $CR_{11}$ and $CR_{12}$ in the antiparallel diodes $D_{11}$ and $D_{12}$. The same aforesaid series combination also includes the primary winding $W_1$ of the low or medium voltage power transformer XF. The concept of a primary and a secondary series resonant circuit is explained in further detail with reference to Fig. 3 of the second above cited reference.

Now, continuing with the description of Fig. 3, the winding $W_2$ of the transformer XF and the individual loops consisting of the inductors $L_{o(2I-1)}$, the diodes $D_{(2i-1)}$ and the capacitors $C_{o(2I-1)}$ (i=0, 1, 2... N), form the path of current flow of the secondary resonant current $i_2$ for the condition that $i_2>0$. This current $i_2$ in the designated "forward" direction, here called $i_2{}^+$, branches then into its components $i_{2, i}$ which flow through the individual loops consisting of the corresponding elements $L_{oi}$, $D_i$ and $C_{oi}$, as defined above, and consistent with Kirchoff's laws when the currents $i_{2, i}$ are flowing. These currents $i_{2, i}$ obey, furthermore, the law that:

$$\sum_{i=0}^{n} i_{2, i}=i_2{}^+ \tag{7}$$

and

$$(i_{2, i})_{av}=(i_{2, i+2})_{av} \tag{8}$$

provided that the individual loop impedances are dimensioned accordingly. The reverse direction $i_2{}^-$ of the current $i_2$ is analogously divided into its components $i_{2, i+1}^-$, which flow through individual loops consisting of the corresponding elements $L_{oi+1}$, $D_{i+1}$ and series configurations of $c_{oi}$. Equations (7) and (8) hold for the elements of $i_2{}^-$ as much as for $i_2{}^+$, with the appropriate interpretation of indici.

The ensuing process of voltage multiplication by the number N of capacitors is described in the last named above cited reference. Thus if a voltage $v_{o1}=aq\ e_s{}^*{}_{av}$ develops over the first stage $C_{o1}$ of the output capacitor $C_o$ and if this capacitor $C_o$ consists of a series arrangement of N such capacitors $C_{o(2I-1)}$ as defined above, then

$$v_o=Naq\ e_s{}^*{}_{av}\quad q\simeq1 \tag{9}$$

or N times the voltage $v_{o1}$ over the first stage $C_{o1}$ of the output capacitor $C_o$. The above cited statement, well known to those skilled in the art, has withstood the test of time. However, the then reported innovation (1) did not include the element of efficiency which is needed for power applications and cannot be implemented with the use of inefficient RC networks, as stated and substantiated at the outset of this specification. The network which is described in the last named above cited referenced does not include series inductors anywhere in the system. All diodes carry, therefore, peaking currents which cause substantial dissipation in the paths of conduction of the current $i_2$. Furthermore did the then reported innovation (2) not include the element of controllability in the sense that the output voltage $v_o$ need not be an integer multiple of the output voltage of a transformer winding which is connected to the points b'—c' of the discussed capacitor multiplier system. It is recalled here that the here disclosed invention includes the potential for efficient power transfer from the source of electric energy to the load concurrent with impedance matching or voltage scaling and output voltage stabilization and/or control independent of external and/or internal effects such as input voltage variations or changes of component characteristics due to aging, variations of environmental conditions and other causes which could affect the occurrence of the intended transfer of energy.

The resonant current used for the power transfer in the here disclosed invention is limited by the nondissipative resonant series impedance rather than by dissipative RC circuits of the old art. There is therefore in principle, no limit to the efficiency of power transfer. The capacitor-multiplier as described with reference to Fig. 3 is being powered from a power converter employing series resonant circuits as described in the first, second and fourth above cited references. This class of the aforesaid power converters has the output characteristic of a controllable current source. Furthermore, these converters can be devised to function as voltage limit current sources by application of the appropriate feedback techniques, as is well known to those skilled in the art, and as also explained in the above cited references. The converter which is being explained with reference to Fig. 3 can therefore control the power transfer from a source of energy to its load, using its own functional mechanism, unlike the prior art.

The control mechanism enclosed in block 40 of Fig. 3 functions exactly as previously described with reference to Figs. 1 and 2. However, only one polarity of the voltage of the secondary winding $W_2$ of transformer XF is now being blocked by the thyristor CR31 in the time interval $T_{of}$ in order to stop a further supply of current $i_2$ to the capacitor multiplier for the purpose of stopping a further increase of the output voltage $v_o$ of the converter. More explicitly, it is explained that the current $i_2^+$ which emanates from the terminal b' of the aforesaid winding $W_2$ and enters the capacitor multiplier, is at the time $T_{ch}$ shunted via thyristor CR31 to the terminal c' of the same winding $W_2$ of the transformer XF. This current $i_2^+$ cannot contribute from then on to a further build-up of the converter's output voltage $v_o$ because the transformer XF is now short circuited in the $i_2^+$ direction. The reverse direction $i_2^-$ of the current $i_2$ does not contribute to the increase of $v_o$ because of the half bridge "driving" circuit of the converter. The ensuing current and voltage waveforms are an analogue of the waveforms shown in Fig. 2 except for the fact that the push-pull character of the waveforms depicted in said Fig. 2 is reduced to the effects of a half wave rectifier process. The corresponding effect and its interpretation is well known to those skilled in the art. The process of control by way of shorting transformer XF at the time $T_{ch}$ is exactly the same as disclosed with reference to Figs. 1 and 2. Control via the third winding $W_3$ in Fig. 1 can be avoided if the thyristors CR31 and CR32 are placed there across the winding $W_2$ of the transformer XF. Both thyristors CR31 and CR32 are needed in that case, because of the push-pull character of the full bridge type converter of Fig. 1. The third winding $W_3$ of the transformer XF in Fig. 1 was introduced for the purpose of convenience of electronic mechanization and of explanation of a principle rather than to indicate a unique form of physical implementation.

A transformerless version of the converter of Fig. 3 is obtained if point b is connected to point b' and point c is connected to point c'. The transformer XF can then be removed and the transformer ratio a−1. The system which ensues from the above indicated connections functions exactly as described above for a 1:1 transformer. Yet a galvanic separation of the source of electric energy and the load is retained through capacitors $C_{11}$ and $C_{12}$. The reference node of the output circuit can thus assume any voltage with respect to the reference node of the source of electric energy, provided the capacitors $C_{11}$ and $C_{12}$ can withstand the concerned difference of potential in addition to the voltage excursions which are needed for the operation of these capacitors by the converter's functional mechanism. The above described galvanic isolation can be removed by connecting point d to d', thus shorting capacitor $C_{12}$ if so desired. The size of capacitor $C_{11}$ has then to be adjusted accordingly.

The inductor $L_{11}$ can be reduced to zero if all inductors $L_{o(2l-1)}$ can be reduced to zero so that $L_{i1}=L_1$, or any meaningful combination thereof, as well understood to those skilled in the art. The inductance value $L_o$, as defined with reference to equation (5) is interpreted accordingly, as is well known to those skilled in the art.

In the writing of this specification, preferential use has been made of symbols and numbering used in the first four of the above cited references for the purpose of consistency and simplicity of notation. This includes the factor $q \approx 1$, which can be interpreted as a roughly approximate value for the efficiency of the concerned class of converter systems.

**Claims**

1. A converter circuit for storing a predetermined quantity of energy derived from an a.c. or d.c. power supply comprising:

a controlled input switching arrangement (63) having input terminals connectable to said source;

storage reactance (Co) for storing electrical energy;

a circuit coupling said storage reactance (Co) to the output of said switching arrangement (63) to deliver energy to said storage reactance, said coupling circuit including reactive impedance (XF) and said switching arrangement (63) being controlled to develop an alternating current in said reactive impedance (XF), and said coupling circuit further including output rectifier means (64) for delivering direct current to said storage reactance (Co) in response to the developed alternating current;

means (45, 46, CR31, CR32, W3) connected to said coupling circuit and activatable to terminate the coupling afforded between the switching arrangement (63) and the storage reactance (Co) such that electrical energy stored in said storage reactance is transferable to a load after such termination; and

a control circuit comprising:

first sensor means (41) coupled to the storage reactance to provide a first signal indicative of the energy stored in the storing reactance;

second sensor means (CT), responsive to the current delivered to the coupling circuit by said switching arrangement (63) to provide a second signal dependent on the electrical state of the coupling circuit; and

means (42, 43) having an input connected to said first and second sensor means and an output connected to said termination means (45, 46, CR31, CR32, W3) and operable to combine said first and second signals to deliver a control output signal to activate said termination means such that said storage reactance (Co) attains a predetermined energy storage not greater than a preset maximum energy storage.

2. A converter circuit as claimed in claim 1 in which the coupling circuit is dimensioned such that the attainment of the storage of said predetermined energy in said storage reactance (Co) extends over the period of a plurality of half cycles of said alternating current and said termination means (45, 46, CR31, CR32, W3) is activated in the course of a final half cycle.

3. A converter circuit as claimed in claim 1 or 2 in which said storage reactance (Co) is capacitive and said first sensor means (41) is responsive to the voltage thereacross.

4. A converter circuit as claimed in any of claims 1 to 3 in which said coupling circuit comprises an input section presenting reactance (L1, C1, W1; L11, C11, C12, W1) to said switching arrangement (63), and an output section including reactance (W2; W2, Lo) connected to said output rectifier means.

5. A converter circuit as claimed in claim 4 in which said output section exhibits a resonant response at the resonant frequency of the input section.

6. A converter circuit as claimed in any of claims 1 to 5 in which said termination means comprises switching means (CR31, CR32) activatable to provide a short circuit in response to said output signal.

7. A converter circuit as claimed in any of claims 1 to 6 in which said coupling circuit comprises a series resonant circuit (L11, C11, C12; C1, L1) including a primary winding (W1) of a transformer (XF), said resonant circuit being energisable by said switching arrangement (63) to generate said alternating current to flow in said primary winding (W1).

8. A converter circuit as claimed in claim 7 in which said second sensor means (CT) is responsive to the current in said primary winding (W1).

9. A converter circuit as claimed in any of claims 1 to 6 in which said coupling circuit comprises a transformer (XF) having a primary winding (W1) in circuit with said switching arrangement (63).

10. A converter circuit as claimed in any of claims 7 to 9 in which said transformer (XF) has a secondary winding (W2) connected to said output rectifier means (64), and said termination means (45, 46, CR31, CR32, W3) comprises a third winding (W3) of said transformer and controllable switching means (CR31, 32) connected across said third winding and actuable in response to said control output signal to short circuit said third winding (W3).

11. A converter circuit as claimed in claim 10 in which said output rectifier means (64) comprises a full-wave rectifier arrangement ($D_{01}$ $D_{03}$) and said controllable switching means (CR31, CR32) provides a short circuit in both directions across said third winding (W3).

12. A converter circuit as claimed in claim 7 or 8 in which said series resonant circuit comprises first and second capacitances (C11, C12) connected to provide galvanic isolation between the input and output of the coupling circuit.

13. A converter circuit as claimed in claim 9 in which said coupling circuit comprises first and second capacitances (C11, C12) connected to provide galvanic isolation between the input and output of the coupling circuit.

14. A converter circuit as claimed in claim 13 in which said first and second capacitances (C11, C12) constitute part of a series resonant circuit (L11, C11, C12, W1) energisable by said switching arrangement (63) to develop said alternating current in the resonant circuit.

15. A converter circuit as claimed in claim 4 or any of claims 5 to 9 when appendent to claim 4 in which said storage reactance comprises a plurality of series-connected capacitances (Co1−Co (2N−1) and said output rectifier means (64) comprises a series of rectifier devices ($D_{o2}$, $D_{1-3}$, $D_2$) connected with like polarity, a respective pair of devices of the series being connected across each of said series-connected capacitances (Co), and in which said input section comprises a series resonant circuit ($L_{11}$, $C_{11}$, $C_{12}$, W1) energisable by said switching arrangement (63) to develop said alternating current and said output section comprises a further plurality of series-connected capacitances (Co) connected at one end thereof to receive alternating current derived from said input section and a respective inductance (Lo) connecting each of the succession of capacitance terminals and junctions between capacitances of said further plurality of capacitances to the junction between the rectifier devices of each successive pair of rectifier devices to provide a voltage scaling circuit; and in which said output section exhibits a resonant response at the frequency of said alternating current.

16. A converter circuit as claimed in claim 4 or any of claims 5 to 9 and 12 to 15 when appendant to claim 4 in which said input and output sections are respectively connected to the primary and secondary windings (W1, W2) of a transformer (XF) and said termination means (CR31) is connected to provide said short circuit across the secondary winding (W2).

## Patentansprüche

1. Umformerschaltung zum Speichern einer vorbestimmten, aus einer Wechselstrom- oder Gleichstromquelle entnommenen Energiemenge, mit:

einer gesteuerten Eingangs-Schaltanordnung (63) mit Eingängen, die mit der Stromquelle verbindbar sind; einer Speicherreaktanz (Co) zum Speichern elektrischer Energie;

einer Schaltung, welche die Speicherreaktanz (Co) mit dem Ausgang der Schaltanordnung (63) koppelt, um Energie auf die Speicherreaktanz zu liefern, wobei die Kopplungsschaltung eine rückwirkende Impedanz (XF) aufweist und die Schaltanordnung (63) zur Schaffung eines Wechselstromes in dieser rückwirkenden Impedanz (XF) gesteuert ist, und wobei diese Kopplungsschaltung außerdem Ausgangs-Gleichrichterorgane (64) zur Lieferung von Gleichstrom auf die Speicherreaktanz (Co) in Abhängigkeit von dem erzeugten Wechselstrom aufweist;

Schaltungsorganen (45, 46, CR31, CR32, W3), die mit der Kopplungsschaltung verbunden und zum Beendigen der zwischen der Schaltungsanordnung (63) und der Speicherreaktanz (Co) erforderlichen Koppelung so aktivierbar sind, daß die in der Speicherreaktanz gespeicherte elektrische Energie nach dieser Beendigung auf eine Last übertragbar ist;

und mit einer Steuerschaltung mit:

ersten Sensormitteln (41), die mit der Speicherreaktanz zum Liefern eines ersten, die in der Speicherreaktanz gespeicherte Energie anzeigenden Signales gekoppelt sind;

zweiten Sensormitteln (CT), die auf den von der Kopplungsschaltung durch die Schaltungsanordnung (63) gelieferten Strom anspricht, um ein zweites vom elektrischen Zustand der Kopplungsschaltung abhängiges Signal zu liefern;

Schaltungsorganen (42, 43) mit einem mit den ersten und zweiten Sensormitteln verbundenen Eingang und einem mit den Abschalt-Schaltungsorganen (45, 46, CR31, CR32, W3) verbundenen Ausgang, die zum Kombinieren der ersten und zweiten Signale betreibbar sind, um ein Steuerausgangssignal zur Aktivierung der Abschalt-Schaltungsorgane zu liefern, dergestalt, daß die Speicherreaktanz (Co) einen vorgegebenen Energiespeicherwert erreicht, der nicht größer ist als ein vorgegebener maximaler Energiespeicherwert.

2. Umformerschaltung nach Anspruch 1, in welcher die Kopplungsschaltung so dimensioniert ist, daß das Erreichen des vorgegebenen Energiespeicherwertes in der Speicherreaktanz (Co) sich über die Periode einer Vielzahl von Halbzyklen des Wechselstromes erstreckt und die Abschalt-Schaltungsorgane (45, 46 CR31, CR32, W3) im Laufe eines letzten Halbzyklus aktiviert werden.

3. Umformerschaltung nach Anspruch 1 oder 2, in welcher die Speicherreaktanz (Co) kapazitiv ist und die ersten Sensormittel (41) auf die an ihr anliegende Spannung ansprechen.

4. Umformerschaltung nach einem der Ansprüche 1 bis 3, in welcher die Kopplungsschaltung einen Eingangsabschnitt, der eine Reaktanz (L1, C1, W1; L11, C11, C12, W1) für die Schaltungsanordnung (63) bildet, und einen Ausgangsabschnitt, der eine mit den Ausgangs-Gleichrichterorganen verbundene Reaktanz (W2; W2, Lo) umfaßt, aufweist.

5. Umformerschaltung nach Anspruch 4, in welcher der Ausgangsabschnitt ein resonantes Ansprechen auf die Resonanzfrequenz des Eingangsabschnittes ergibt.

6. Umformerschaltung nach einem der Ansprüche 1 bis 5, in welchem die Abschalt-Schaltungsorgane Schaltorgane (CR31, CR32) aufweisen, die zur Bildung eines vom Ausgangssignal abhängigen Kurzschlusses aktivierbar sind. ·

7. Umformerschaltung nach einem der Ansprüche 1 bis 6, in welcher die Kopplungsschaltung einen Reihenresonanzkreis (L11, C11, C12; C1, L1) aufweist, der eine Primärwicklung (W1) eines Übertragers (XF) umfaßt und der durch die Schaltungsanordnung (63) erregbar ist, um den in der Primärwicklung (W1) fließenden Wechselstrom zu erzeugen.

8. Umformerschaltung nach Anspruch 7, in welcher die zweiten Sensormittel (CT) auf den Strom in der Primärwicklung (W1) ansprechen.

9. Umformerschaltung nach einem der Ansprüche 1 bis 6, in welcher die Kopplungsschaltung einen Übertrager (XF) aufweist, der eine Primärwicklung (W1) in Verbindung mit der Schaltanordnung (63) hat.

10. Umformerschaltung nach einem der Ansprüch 7 bis 9, in welcher der Übertrager (XF) eine mit den Ausgangs-Gleichrichterorganen (64) verbundene Sekundärwicklung (W2) aufweist, und die Abschalt-Schaltungsorgane (45, 46, CR31, CR32, W3) eine dritte Wicklung (W3) des Übertragers und steuerbare Schaltorgane (CR31, 32), die parallel zu der dritten Wicklung geschaltet und in Abhängigkeit von dem Steuerausgangssignal betätigbar sind, um die dritte Wicklung (W3) kurzzuschließen, aufweisen.

11. Umformerschaltung nach Anspruch 10, in welcher die Ausgangs-Gleichrichterorgane (64) eine Vollweg-Gleichrichteranordnung ($D_{01}$, $D_{03}$) aufweisen und die steuerbaren Schaltorgane (CR31, CR32) einen Kurzschluß in beiden Richtungen über die dritte Wicklung (W3) bewirken.

12. Umformerschaltung nach Anspruch 7 oder 8, in welcher der Reihenresonanzkreis erste und zweite

9

Kapazitäten (C11, C12) aufweist, die zur Bildung einer galvanischen Trennung zwischen dem Eingang und dem Ausgang der Kopplungsschaltung geschaltet sind.

13. Umformerschaltung nach Anspruch 9, in welcher die Kopplungsschaltung erste und zweite Kapazitäten (C11, C12) aufweist, die zur Bildung einer galvanischen Trennung zwischen dem Eingang und dem Ausgang der Kopplungsschaltung geschaltet sind.

14. Umformerschaltung nach Anspruch 13, in welchem die ersten und zweiten Kapazitäten (C11, C12) Teil eines Reihenresonanzkreises (L11, C11, C12, W1) sind, der durch die Schaltungsanordnung (63) zur Bildung des Wechselstromes im Resonanzkreis erregbar ist.

15. Umformerschaltung nach Anspruch 4 oder einem der Ansprüche 5 bis 9 in Verbindung mit Anspruch 4, in welcher die Speicherreaktanz eine Vielzahl von in Reihe geschalteten Kondensatoren (Co1−Co (2N−1)) und die Ausgangs-Gleicherichterorgane (64) eine Reihe von Gleichrichterorganen (Do$_2$, D$_{1-3}$, D$_2$), die mit gleicher Polarität geschaltet sind, aufweisen, und in welcher entsprechende Paare von Organen der Reihe parallel zu jedem der in Serie geschalteten Kondensatoren (Co) gelegt sind, und in welcher der Eingangsabschnitt einen Reihenresonanzkreis (L11, C11, C12, W1) umfaßt, der durch die Schaltungsanordnung (63) zur Lieferung des Wechselstromes erregbar ist, und in welchem der Ausgangsabschnitt eine zusätzliche Vielzahl von in Reihe geschalteten Kondensatoren (Co) aufweist, die dort mit einem Ende verbunden sind, um aus dem Eingangsabschnitt stammenden Wechselstrom zu empfangen, wobei eine entsprechende Induktanz (Lo) jeden der aufeinanderfolgenden Kondensatoranschlüsse und Verbindungen zwischen den Kondensatoren der zusätzlichen Vielzahl von Kondensatoren mit den Verbindungsstellen zwischen den Gleichrichterorganen eines jeden aufeinanderfolgenden Paares von Gleichrichterorganen verbindet, um eine Spannungsteilerschaltung zu bilden; und in welcher der Ausgangsabschnitt ein resonantes Ansprechen bei der Frequenz des Wechselstromes ergibt.

16. Umformerschaltung nach Anspruch 4 oder einem der Ansprüche 5 bis 9 und 12 bis 15 in Verbindung mit Anspruch 4, in welcher der Eingangsabschnitt und Ausgangsabschnitt entsprechend mit der Primärwicklung und Sekundärwicklung (W1, W2) des Übertragers (XF) verbunden sind und das Abschalt-Schaltungsorgan (CR31) zur Bildung des Kurzschlusses über der Sekundärwicklung (W2) geschaltet ist.


## Revendications

1. Circuit convertisseur pour le stockage d'une quantité prédéterminée d'énergie provenant d'une alimentation de courant alternatif ou continu comprenant:
un dispositif de commutation d'entrée commandé (63) comportant des bornes d'entrée pouvant être connectées à la source;
une réactance de stockage (Co) pour stocker de l'énergie électrique;
un circuit couplant la réactance de stockage (Co) à la sortie du dispositif de commutation (63) pour fournir de l'énergie à la réactance de stockage, le circuit de couplage comprenant une impédance réactive (XF), le dispositif de commutation (63) étant commandé de manière à produire un courant alternatif dans l'impédance réactive (XF) et le circuit de couplage comprenant, en outre, un redresseur de sortie (64) pour fournir du courant continu à la réactance de stockage (Co) en réaction au courant alternatif produit;
un dispositif (45, 46, CR31, CR32, W3) connecté au circuit de couplage et pouvant être activé pour faire cesser le couplage établi entre le dispositif de commutation (63) et la réactance de stockage (Co), de telle sorte que l'énergie électrique stockée dans la réactance de stockage puisse être transférée à une charge après cette cessation, et
un circuit de commande comprenant:
un premier détecteur (41) connecté à la réactance de stockage pour fournir un premier signal indicatif de l'énergie stockée dans la réactance de stockage;
un second détecteur (CT) réagissant au courant fourni au circuit de couplage par le dispositif de commutation (63) pour fournir un second signal dépendant de l'état électrique du circuit de couplage, et
un dispositif (42, 43) comportant une entrée connectée au premier et au second détecteur et une sortie connectée au dispositif de cessation (45, 46, CR31, CR32, W3) et propre à combiner le premier et le second signal pour fournir un signal de sortie de commande en vue d'activer le dispositif de cessation de telle sorte que la réactance de stockage (Co) atteigne un stockage d'énergie prédéterminé ne dépassant pas un stockage d'énergie maximum préréglé.

2. Circuit convertisseur suivant la revendication 1, dans lequel le circuit de couplage est dimensionné de telle sorte que le stockage de l'énergie prédéterminé dans la réactance de stockage (Co) s'étende sur la période de plusieurs alternances du courant alternatif et le dispositif de cessation (45, 46, CR31, CR32, W3) est activé au cours d'une alternance finale.

3. Circuit convertisseur suivant la revendication 1 ou 2, dans lequel la réactance de stockage (Co) est capacitive et le premier détecteur (41) réagit à la tension présente dans cette réactance.

4. Circuit convertisseur suivant l'une quelconque des revendications 1 à 3, dans lequel le circuit de couplage comprend une section d'entrée présentant une réactance (L1, C1, W1; L11, C11, C12, W1) au dispositif de commutation (63), et une section de sortie comprenant une réactance (W2; W2, Lo) connectée au redresseur de sortie.

5. Circuit convertisseur suivant la revendication 4, dans lequel la section de sortie présente une réponse résonnante à la fréquence de résonance de la section d'entrée.

6. Circuit convertisseur suivant l'une quelconque des revendications 1 à 5, dans lequel le dispositif de cessation comprend un moyen de commutation (CR31, CR32) pouvant être activé pour créer un court-circuit en réaction au signal de sortie.

7. Circuit convertisseur suivant l'une quelconque des revendications 1 à 6, dans lequel le circuit de couplage comprend un circuit résonnant série (L11, C11, C12; C1, L1) comprenant un enroulement primaire (W1) d'un transformateur (XF), le circuit résonnant pouvant être excité par le dispositif de commutation (63) pour produire le courant alternatif qui doit passer dans l'enroulement primaire (W1).

8. Circuit convertisseur suivant la revendication 7, dans lequel le second détecteur (CT) réagit au courant dans l'enroulement primaire (W1).

9. Circuit convertisseur suivant l'une quelconque des revendications 1 à 6, dans lequel le circuit de couplage comprend un transformateur (XF) comportant un enroulement primaire (W1) en circuit avec le dispositif de commutation (63).

10. Circuit convertisseur suivant l'une quelconque des revendications 7 à 9, dans lequel le transformateur (XF) comporte un enroulement secondaire (W2) connecté au redresseur de sortie (64) et le dispositif de cessation (45, 46, CR31, CR32, W3) comprend un troisième enroulement (W3) du transformateur et un moyen de commutation pouvant être commandé (CR31, 32), connecté au troisième enroulement et pouvant être actionné en réaction au signal de sortie de commande pour court-circuiter le troisième enroulement (W3).

11. Circuit convertisseur suivant la revendication 10, dans lequel le redresseur de sortie (64) comprend un redresseur des deux alternances $(D_{01}, D_{03})$ et le moyen de commutation pouvant être commandé (CR31, CR32) produit un court-circuit dans les deux sens dans le troisième enroulement (W3).

12. Circuit convertisseur suivant la revendication 7 ou 8, dans lequel le circuit résonnant série comprend une première et une seconde capacité (C11, C12) connectées de manière à assurer une isolation galvanique entre l'entrée et la sortie du circuit de couplage.

13. Circuit convertisseur suivant la revendication 9, dans lequel le circuit de couplage comprend une première et une seconde capacité (C11, C12) connectées de manière à assurer une isolation galvanique entre l'entrée et la sortie du circuit de couplage.

14. Circuit convertisseur suivant la revendication 13, dans lequel la première et la secdonde capacité (C11, C12) font partie d'un circuit résonnant série (L11, C11, C12, W1) pouvant être excité par le dispositif de commutation (63) pour produire le courant alternatif dans le circuit résonnant.

15. Circuit convertisseur suivant la revendication 4 ou l'une quelconque des revendications 5 à 9 découlant de la revendication 4, dans lequel la réactance de stockage comprend plusieurs capacités montées en série $(Co1-Co(2N-1))$, et le redresseur de sortie (64) comprend une série de dispositifs redresseurs $(D_{02}, D_{1-3}, D_2)$ connectés selon la même polarité, une paire correspondante de dispositifs de la série étant connectée à chacune des capacités montées en série (Co); dans lequel la section d'entrée comprend un circuit résonnant série $(L_{11}, C_{11}, C_{12}, W1)$ pouvant être excité par le dispositif de commutation (63) pour produire le courant alternatif et la section de sortie comprend plusieurs autres capacités montées en série (Co), connectées à une extrémité en vue de recevoir du courant alternatif provenant de la section d'entrée et une inductance respective (Lo) connectant chacune de la succession de bornes de capacités et des jonctions entre capacités des dites autres capacités à la jonction entre les dispositifs redresseurs de chaque paire successive de dispositifs redresseurs pour fournir un circuit démultiplicateur de tension; et dans lequel la section de sortie présente une réponse résonnante à la fréquence du courant alternatif.

16. Circuit convertisseur suivant la revendication 4 ou l'une quelconque des revendications 5 à 9 et 12 à 15 découlant de la revendication 4, dans lequel les sections d'entrée et de sortie sont connectées respectivement aux enroulements primaire et secondaire (W1, W2) d'un transformateur (XF) et le dispositif de cessation (CR31) est connecté de manière à produire le court-circuit dans l'enroulement secondaire (W2).

FIG. I

1

FIG. 2

FIG. 3

$v_o = Naq\, e^*_{s\,av}$

$Z_L$

$K_O$ 41

40

$\sum$ 43

$E_R$

42

46

FIRING PULSE GENERATOR 31

$C_{o(2N-1)}$   $aq\, e^*_{s\,av}$

$C_{o3}$   $aq\, e^*_{s\,av}$   $aq\, e^*_{s\,av}$   $C_{o1}$

$D_{2N-1}$   $D_{2(N-1)}$   $D_3$   $D_2$   $D_1$

$i_{2,2N-1}$   $i_{2,3}$   $i_{2,2}$   $i_{2,1}$   $D_{o2}$

$L_{o2N-1}$   $C_{o2(N-1)}$   $L_{o3}$   $C_{o2}$   $L_{o1}$

CR31

68

$I_2$   $b'$   $c''$

$W_2$

$XF$   $1:a$

$b$   $W_1$   $d'\, c$

$C11$   $C12$   $d'$   $d$

$L_{11}$   $i_1$   RCT   $K_{CT}$ 44

63   CR11   CR21   ICT(RCT)

D11   D21

62   $C_4$

$e^*_s$

GATE TRIGGER SIGNALS

FIRING PULSE GENERATORS 11 AND 12

$V_{or}$   CS1   CS2

$i_r$   CONVERTER CONTROL SYSTEM

3